Europäisches Patentamt

European Patent Office

Office européen des brevets

(19)

(11) Veröffentlichungsnummer : **0 198 316 B1**

(12) **EUROPÄISCHE PATENTSCHRIFT**

(45) Veröffentlichungstag der Patentschrift : 11.10.89

(51) Int. Cl.⁴ : **B 25 J 9/04**

(21) Anmeldenummer : **86104433.7**

(22) Anmeldetag : **01.04.86**

(54) **Industrieroboter.**

(30) Priorität : **16.04.85 DE 3513706**

(43) Veröffentlichungstag der Anmeldung : **22.10.86 Patentblatt 86/43**

(45) Bekanntmachung des Hinweises auf die Patenterteilung : **11.10.89 Patentblatt 89/41**

(84) Benannte Vertragsstaaten : **DE FR IT SE**

(56) Entgegenhaltungen :
EP—A— 0 073 598
EP—A— 0 078 522
EP—A— 0 105 069
DE—A— 2 545 865
FR—A— 1 539 484
FR—A— 1 548 863
GB—A— 2 084 956
US—A— 4 274 778
US—A— 4 393 541

(73) Patentinhaber : **Siemens Aktiengesellschaft Wittelsbacherplatz 2 D-8000 München 2 (DE)**

(72) Erfinder : **Eberle, Manfred Würzburger Ring 70 D-8520 Erlangen (DE)**
Erfinder : **Keppler, Rainer Gartenstrasse 24 D-8523 Baiersdorf (DE)**
Erfinder : **Köslich, Bernd Bussardweg 2 D-8522 Herzogenaurach-Niederndorf (DE)**

EP 0 198 316 B1

**Beschreibung**

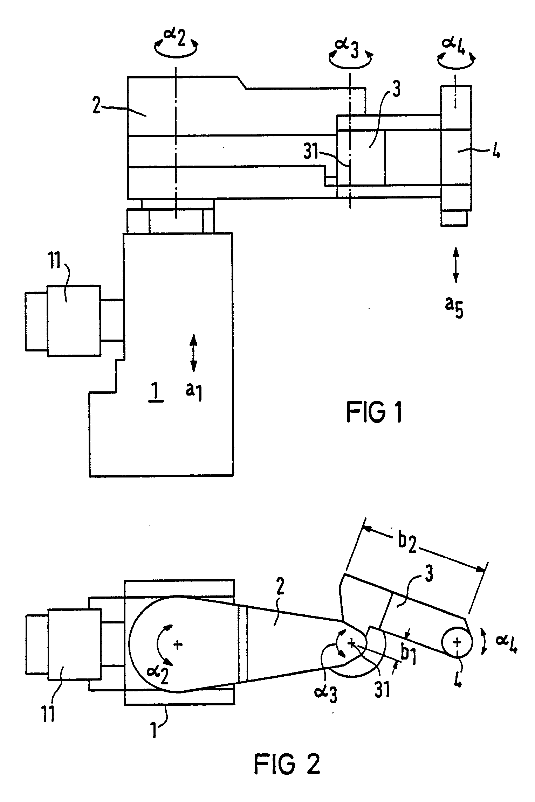

Die Erfindung bezieht sich auf einen Industrieroboter mit Schwenkarm, bei dem zwei aufeinanderfolgende Armteile in zueinander parallelen Horizontalebenen schwenkbar sind. Mit diesem Oberbegriff wird auf eine Anordnung Bezug genommen, wie sie beispielsweise aus der US-Patentschrift 43 48 142 (Fig 1) zu entnehmen ist. Bei dieser bekannten Konstruktion besteht der Schwenkarm aus zwei geradlinigen Armteilen, die über ein Drehgelenk miteinander gekuppelt sind. Infolge dieser Konstruktion ist der Schwenkbereich des zweiten Armteils in bezug auf den ersten Armteil im Hinblick auf die Endlagen begrenzt, z. B. auf ± 120° um die Mittellinie. Es gibt nun Anwendungsfälle, bei denen es erwünscht ist, die beiden Armteile annähernd parallel zueinander zu schwenken.

Bei Konstruktionen mit relativ schmalen Armteilen, wie z. B. bei einem Vertikalarm, nach der EP-A1-01 05 069 läßt sich eine annähernd parallele Endlage durch leichte Abkröpfung der Armteile erreichen. Dies führt aber nicht zum Ziel, wenn es sich um relativ breite und große Horizontalschwenkarme handelt, in denen Motoren, Getriebe und viele andere Elemente mit eingebaut sind.

Die Aufgabe der vorliegenden Erfindung besteht darin, bei einem Roboter der eingangs genannten Art eine einfache Konstruktion eines horizontalen Schwenkarmes anzugeben, durch die es möglich ist, daß der zweite Armteil einen sehr hohen Schwenkbereich aufweist.

Diese Aufgabe wird erfindungsgemäß dadurch gelöst, daß der erste Armteil konisch zulaufend und der zweite Armteil in der Schwenkebene in Art eines annähernd rechtwinkeligen Winkelhebels ausgebildet sind, wobei das Längenverhältnis beider Hebelteile zwischen 1 bis 3 und 1 bis 8 liegt und so auf die Konizität abgestimmt ist, daß beide Armteile in eine annähernd parallele Lage zueinander schwenkbar sind. Durch diese Konstruktion, bei der das Drehgelenk zwar am Ende des ersten konischen Armteils verbleibt, aber der zweite Arm rechtwinkelig gekröpft abgesetzt ist, läßt sich auf einfache Weise erreichen, daß zumindest in einer Endlage beide Armteile annähernd parallel aneinanderliegen, selbst wenn sie in der gleichen Horizontalschwenkebene angeordnet sind.

In weiterer Ausgestaltung der Erfindung ist es häufig auch von Vorteil, wenn die Drehgelenkanordnung bzw. beide Armteile so gestaltet sind, daß durch einfaches Umdrehen des zweiten Armteils im Bedarfsfall auch die andere Endlage erreicht werden kann, falls dies aus anwendungstechnischen Gründen, z. B. wenn zwei Roboter zusammenarbeiten, sich als vorteilhaft erweisen sollte.

Anhand eines in der Zeichnung dargestellten Ausführungsbeispiels sei die Erfindung näher erläutert ; es zeigen.

Fig 1 eine schematische Seitenansicht des Roboters,

Fig 2 eine Draufsicht auf den Roboter und

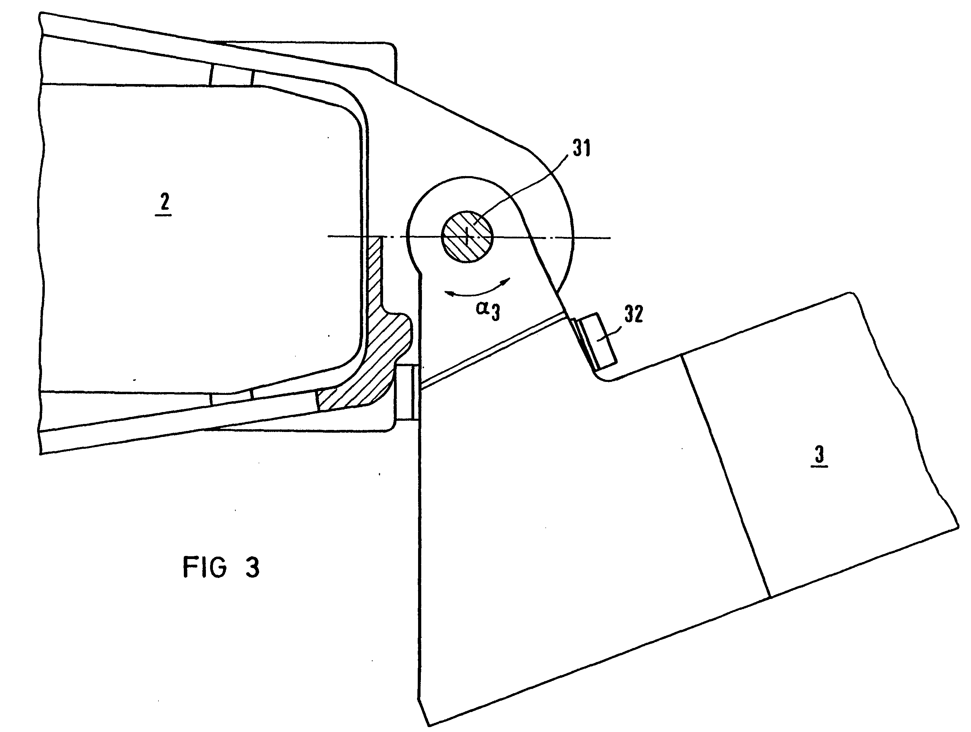

Fig 3 nähere Details beider Armteile des Schwenkteiles am Drehgelenk.

Wie aus Fig 1 ersichtlich, besteht der dargestellte Horizontalroboter aus einem Hubteil 1 mit einem elektromotorischen Antrieb 11, durch das der Schwenkarm mit den Armteilen 2 und 3 vertikal in Richtung des Doppelpfeiles al verschiebbar ist. Der Armteil 2 des Schwenkarmes ist durch einen nicht dargestellten Elektroantrieb mit Getriebe um eine Drehachse mit dem Winkel $\alpha 2$ schwenkbar. Am vorderen Ende dieses konisch zulaufenden Armteils 2 ist ein Drehgelenk 31 angeordnet, um das mit dem Winkel $\alpha 3$ der zweite Armteil 3 schwenkbar ist. Dieser Armteil 3 ist in der Art eines rechtwinkeligen Winkelhebels ausgebildet, wobei das Verhältnis des die Abkröpfung bedingenden Winkelteils b1 zum zweiten Winkelteil b2 etwa 1 : 6 beträgt.

Wie aus der Zeichnung ersichtlich, ist es durch die winkelige Ausbildung des Armteiles 3 in Verbindung mit der konischen Gestaltung des Armteiles 2 ohne weiteres möglich, beide Armteile in eine annähernd zueinander parallele Lage zu schwenken, wobei die Endlagen dieser Schwenkbewegung durch Puffer 32 begrenzt werden.

Am vorderen Ende des Armteiles 3 findet sich dann noch eine weitere kombinierte Schwenk-Hubachse 4, mit dem Drehwinkel $\alpha 4$ und der Hubbewegung a5.

**Patentanspruch**

Industrieroboter mit Schwenkarm, bei dem zwei aufeinanderfolgende Armteile in zueinander parallelen Horizontalebenen schwenkbar sind, dadurch gekennzeichnet, daß der erste Armteil (2) konisch zulaufend und der zweite Armteil (3) in der Schwenkebene in Art eines annähernd rechtwinkeligen Winkelhebels ausgebildet sind, wobei das Längenverhältnis beider Hebelteile zwischen 1 bis 3 und 1 bis 8 liegt und so auf die Konizität abgestimmt ist, daß beide Armteile (2, 3) in eine annähernd parallele Lage zueinander schwenkbar sind.

**Claim**

Industrial robot with swivel arm, in which two consecutive arm parts can be swivelled in horizontal planes parallel to one another, characterised in that the first arm part (2) is constructed with a conical taper and the second arm part (3) is constructed in the swivel plane, in the manner of an approximately rightangled angle lever, the length ratio of the two lever parts being between 1 to 3 and 1 to 8, and thus being in proportion to the taper, so that the two arm parts (2, 3) can be swivelled into an approximately parallel attitude to each other.

**Revendication**

Robot industriel comportant un bras pivotant, dans lequel deux éléments de bras, disposés à la suite l'un de l'autre, peuvent pivoter dans des plans horizontaux parallèles, caractérisé par le fait que le premier élément de bras (2) possède une forme conique et que le second élément de bras (3), situé dans le plan de pivotement, est réalisé à la manière d'un levier coudé approximativement à angle droit, le rapport des longueurs des deux parties du levier étant compris entre 1 à 3 et 1 à 8 et étant ajusté sur la conicité de telle sorte que les deux éléments de bras (2, 3) peuvent pivoter l'un par rapport à l'autre en étant approximativement parallèles.

FIG 1

FIG 2

FIG 3

31

32

3

2